Europäisches Patentamt

European Patent Office

Office européen des brevets

(19)

(11) Veröffentlichungsnummer: **0 012 417**
**B1**

(12) EUROPÄISCHE PATENTSCHRIFT

(45) Veröffentlichungstag der Patentschrift:
05.08.81

(51) Int. Cl.³: **C 08 L 75/04** // C08K7/02,
C08L51/04

(21) Anmeldenummer: 79105049.5

(22) Anmeldetag: 10.12.79

(54) Thermoplastische Chemiewerkstoffe und Verfahren zu ihrer Herstellung.

(30) Priorität: 16.12.78 DE 2854406

(43) Veröffentlichungstag der Anmeldung:
25.06.80 Patentblatt 80/13

(45) Bekanntmachung des Hinweises auf die Patenterteilung:
05.08.81 Patentblatt 81/31

(84) Benannte Vertragsstaaten:
AT BE CH DE FR GB IT NL SE

(56) Entgegenhaltungen:
DE-A-2 337 706
DE-A1-2 435 684
DE-B1-2 355 942

(73) Patentinhaber: BAYER AG, Zentralbereich Patente,
Marken und Lizenzen, D-5090 Leverkusen 1, Bayerwerk
(DE)

(72) Erfinder: Goyert, Wilhelm, Dr., Am Wolfskaul 10,
D-5000 Köln 80 (DE)
Erfinder: Grimm, Wolfgang, In Holzhausen 81,
D-5090 Leverkusen 3 (DE)
Erfinder: Awater, Albert, Dr., Zum Hahnenberg 54,
D-5068 Odenthal (DE)
Erfinder: Wagner, Hans, Dr., Tizianstrasse 13,
D-4047 Dormagen (DE)
Erfinder: Krüger, Bruno, Burscheider Strasse 494,
D-5090 Leverkusen 31 (DE)

Thermoplastische Chemiewerkstoffe und Verfahren zu ihrer Herstellung

Die Erfindung betrifft neue, hinsichtlich ihrer Wärmestandfestigkeit verbesserte Chemiewerkstoffe, bestehend aus einem Polyurethan («PUR»), einem faserartigen Verstärker und einem polaren Polymerisat auf Basis olefinisch ungesättigter Monomerer.

Es ist bekannt, dass Glasfasern in die verschiedensten Thermoplaste – einschliesslich thermoplatischer Polyurethane («TPU») –, eingearbeitet werden können. Produkte dieser Art haben jedoch bei harter PUR-Basis eine ungenügende Schlagzähigkeit in der Kälte und bei welcher PUR-Basis schlechte Anfangsfestigkeiten beim Entformen und nur geringen Weiterreisswiderstand.

Weiterhin ist bekannt, dass – z.B. durch Coextrusion – Gemische («Blends») von TPU und ABS-Polymerisate enthaltenden Thermoplasten hergestellt werden können. Bei der Herstellung des ABS-Polymerisats werden im allgemeinen ca. 30 Gew.-% Butadien eingesetzt (Beispiele von US-PS 3 049 505). Ein Nachteil dieser thermoplastischen Blends ist ihre ungenügende Wärmestandfestigkeit: Schon bei 80 °C hält das Material keine grösseren Belastungen mehr aus. Auch die Kälteschlagzähigkeit der Blends ist mässig und die Abriebbeständigkeit schlecht. Nach dem Entformen können aus diesen Produkten hergestellte Formteile nicht sofort gestapelt werden, da sie noch ungenügende Festigkeit aufweisen.

In der DE-OS 2 014 385 wird die Umsetzung von reaktionsfähige Wasserstoffatome aufweisenden Copolymerisat-Latices auf Basis von Butadien, Styrol, Methacrylsäure, Acrylnitril usw. mit Polyisocyanaten beschrieben. Dabei stellt der Latex die durchgehende Matrix des fertigen Kunststoffes, der nicht thermoplastisch ist, dar. Im Gegensatz zu diesen Materialien weisen die nachfolgend beschriebenen erfindungsgemässen Produkte weit höhere Festigkeiten und Steifigkeiten auf.

In der DE-OS 26 27 073 werden PUR-Dispersionen in Polyolen beansprucht, denen auch wässrige Polymerisat-Latices zugefügt werden können. Diese Dispersionen dienen als Polyolkomponente bei der Herstellung von Polyurethankunststoffen. Die in den Beispielen beschriebenen Produkte lassen sich nicht thermoplastisch verformen. Ähnliches gilt auch für die US-PS 2 993 013.

In der DE-AS 23 55 942 werden Klebstoffe auf Basis von Gemischen aus Polyurethan, Styrol-Copolymerisaten und ABS-Polymeren beschrieben. Voraussetzung für die Klebwirkung ist die Anwesenheit der Styrol-Copolymerisate. Ein Hinweis auf Thermoplaste bzw. die Mitverwendung von Glasfasern wird jedoch nicht gegeben.

Gegenstand der DE-OS 2 128 199 sind Mischpolymerisate, welche durch Umsetzung von Polyisocyanaten mit Polyolen in Gegenwart anderer Thermoplaste hergestellt werden. Diese Mischpolymerisate sind teils nicht schlagzäh (wegen der Mitverwendung von Styrol) bzw. weisen niedrige mechanische Festigkeiten auf. Die Wärmestandfestigkeit der Produkte ist unzureichend.

Es wurde nun überraschenderweise ein thermoplastischer Werkstoff gefunden, der gleichzeitig sehr hohe mechanische Festigkeiten, unter Belastung eine Wärmestandfestigkeit bis über 110 °C, teils bis 160 °C, und günstige Schlagzähigkeit in der Kälte aufweist. Dieser Werkstoff, bestehend aus thermoplastischem Polyurethan, Glasfaser und polarem Polymerisat, lässt sich überraschend gut auf den üblichen Verarbeitungsmaschinen für Thermoplasten verformen. Die Formkörper können bereits unmittelbar nach ihrer Herstellung gestapelt und transportiert werden. Sie lassen sich leicht lackieren und zeigen dabei sehr gute Lackhaftung. Die Kälteschlagfestigkeit bei $-30$ °C ist trotz der zum Teil bereits eingefrorenen PUR-Matrix und der anwesenden Glasfasern sehr günstig.

Gegenstand der vorliegenden Erfindung ist somit ein thermoplastischer Chemiewerkstoff, bestehend aus

A) 60–97 Gew.-% (bezogen auf A + B) eines thermoplastischen Polyurethans und

B) 40–3 Gew.-% (bezogen auf A + B) eines faserartigen Verstärkungsmaterials, dadurch gekennzeichnet, dass er (bezogen auf 100 Teile A + B)

C) 36–3 Gew.-Teile, vorzugsweise 15–4 Gew.-Teile, eines polaren Polymerisats enthält.

Die thermoplastischen Polyurethane (Komponente A) sind an sich bekannt und werden nach Verfahren des Standes der Technik hergestellt. Sie sind im allgemeinen aus langkettigen Polyolen vom Molekulargewicht 400–10 000, Diisocyanaten und Kettenverlängerungsmitteln (vorzugsweise kurzkettigen Polyolen) vom Molekulargewicht bis zu 400 aufgebaut, wobei das NCO/OH-Verhältnis in der Regel bei 0,95 bis 1,10 liegt.

Als im wesentlichen lineare Polyole mit Molekulargewichten zwischen 400 und 10 000, bevorzugt zwischen 800 und 6000, kommen erfindungsgemäss praktisch alle an sich bekannten, vorzugsweise 2, gegebenenfalls – in untergeordneten Mengen – auch 3, zerewitinoffaktive Gruppen (im wesentlichen Hydroxylgruppen) enthaltenden Polyester, Polylactone, Polyäther, Polythioäther, Polyesteramide, Polycarbonate, Polyacetale, Vinylpolymere wie z.B. Polybutadiendiole, bereits Urethan- oder Harnstoffgruppen enthaltende Polyhydroxylverbindungen, gegebenenfalls modifizierte natürliche Polyole, sowie auch andere zerewitinoffaktive Gruppen wie Amino-, Carboxyl- oder Thiolgruppen enthaltende Verbindungen in Betracht. Diese Verbindungen entsprechen dem Stand der Technik und werden z.B. in den DE-Offenlegungsschriften 23 02 564, 24 23 764 und 25 49 372 (US-Patent 3 963 679) und 24 02 840 (US-Patent 3 984 607) sowie der DE-AS 24 57 387 (US-Patent 4 035 213) eingehend beschrieben. Erfindungsgemäss bevorzugt sind hydroxylgruppenhaltige Polyester aus Glykolen bzw. Adipinsäure, Phthal- und/oder Terephthalsäure sowie deren Hydrierungsprodukten, Hydroxylpolycarbonate, Polycaprolactone, Polyäthylenoxid, Polypro-

pylenoxid, Polytetrahydrofuran und Mischpolyäther aus Äthylenoxid und Propylenoxid.

Erfindungsgemäss zu verwendende Diisocyanate sind die an sich bekannten aliphatischen, cycloaliphatischen, aromatischen, araliphatischen und heterocyclischen Diisocyante des Standes der Technik, wie sie z.B. in den bereits genannten DE-Offenlegungsschriften 23 02 564, 24 23 764, 25 49 372, 24 02 840 und 24 57 387 beschrieben sind. Erfindungsgemäss bevorzugte Diisocyanate sind gegebenenfalls durch Methylgruppen substituiertes Hexamethylendiisocyanat, Isophorondiisocyanat und 4,4'-Diisocyanatodiphenylmethan.

Die genannten Diisocyanate können gegebenenfalls zusammen mit bis zu ca. 15 Mol-% (bezogen auf Diisocyanat) eines höherfunktionellen Polyisocyanats eingesetzt werden; die Menge des höherfunktionellen Polyisocyanats muss jedoch so begrenzt werden, dass ein noch schmelzbares bzw. thermoplastisches Produkt erhalten wird. Eine grössere Menge an höherfunktionellen Isocyanaten muss im allgemeinen durch die Mitverwendung von im Durchschnitt weniger als difunktionellen Hydroxyl- bzw. Aminoverbindungen (bzw. auch von Monoisocyanaten) ausgeglichen werden, so dass eine zu weit gehende chemische Vernetzung des Produkts vermieden wird. Es ist aber selbstverständlich auch möglich, die Reaktion so zu führen, dass eine nachträgliche chemische Vernetzung des Elastomeren während der Lagerung eintritt (z.B. durch Verwendung eines Überschusses an NCO-Gruppen enthaltenden Verbindungen). Beispiele für höherfunktionelle Isocyanate und monofunktionelle Verbindungen sind ebenfalls dem oben zitierten Stand der Technik zu entnehmen. Beispielsweise seien Monoamine wie Butyl- und Dibutylamin, Octylamin, Stearylamin, N-Methylstearylamin, Pyrrolidin, Piperidin und Cyclohexylamin sowie Monoalkohole wie Butanol, 1-Äthylhexanol, Octanol, Dodecanol, Amylalkohole, Cyclohexanol und Äthylenglykolmonoäthyläther erwähnt.

Auch die erfindungsgemäss einzusetzenden Kettenverlängerungsmittel sind an sich bekannt und z.B. in den DE-Offenlegungsschriften 23 02 564, 24 23 764, 25 49 372, 24 02 799, 24 02 840 und 24 57 387 beschrieben. Es sind dies niedermolekulare Polyalkohole (vorzugsweise Glykole), Polyamine, Hydrazine und Hydrazide. Auch Aminoalkohole wie Äthanolamin, Diäthanolamin, N-Methyldiäthanolamin, Triäthanolamin und 3-Aminopropanol kommen erfindungsgemäss in Frage. Bevorzugte Kettenverlängerungsmittel sind Äthylenglykol, Di- und Triäthylenglykol, 1,2-Propandiol, 1,3- und 1,4-Butandiol, 1,6-Hexandiol, 2-Äthylhexandiol-(1,3), 2,2-Dimethylpropandiol, 1,4-Bis-hydroxy-methylcyclohexan und Hydrochinondihydroxyäthyläther. Besonders bevorzugt sind Hydrochinondi-β-hydroxyäthyläther, 1,4-Butandiol und 1,6-Hexandiol.

Als faserartige Verstärker (Komponente B der erfindungsgemässen Werkstoffe) sind anorganische Fasern den organischen Fasern vorzuziehen, weil der Verstärkungseffekt grösser ist. Ausserdem ist die Wärmestandfestigkeit der anorganischen Fasern günstiger. Bevorzugte anorganische Fasern für die vorliegende Erfindung sind beschlichtete Glasfasern mit einer Stärke von 8–30, insbesondere 10–18 µm sowie mit einer Länge von 0,3 mm bis etwa 100 mm, insbesondere von 1–10 mm, die nach dem Stand der Technik hergestellt werden.

Die Glasfaserschlichten bestehen im wesentlichen aus 2 Komponenten: einer filmbildenden Komponente (im allgemeinen Polyvinylacetat, Polyester, Polyurethane oder Epoxidharze) und als Haftvermittler im allgemeinen einer siliziumorganischen Verbindung. Im Falle der erfindungsgemäss bevorzugten Schlichtemittel auf Polyurethanbasis sollte mindestens ein Aminogruppen enthaltender Haftvermittler anwesend sein.

Daneben können die Glasfaserschlichten gegebenenfalls auch an sich bekannte Antistatika und Gleitmittel enthalten.

Verfahren zur Herstellung von Glasfaserschlichten auf Polyurethanbasis werden z.B. in den DE-Auslegeschriften 24 26 657 (GB-PS 1 456 628) und 24 26 654 beschrieben. Der anorganischen Faser können auch Füllstoffe wie Glimmer, andere Silikate, Kreide und Farbstoffe zugegeben werden.

«Polare Polymerisate» (Komponente C) im Sinne der vorliegenden Erfindung sind Polymerisate, welche mindestens 10 Gew.-%, vorzugsweise mindestens 15 Gew.-%, besonders bevorzugt mindestens 20 Gew.-%, an polaren Monomerbausteinen und gleichzeitig mindestens 30 Gew.-%, bevorzugt mehr als 50 Gew.-%, an Butadien-, Isopren- und/oder Acrylsäureestereinheiten (jeweils bezogen auf Gesamtmenge von C) enthalten. Unter «polaren Monomeren» sind dabei insbesondere die an sich bekannten Acrylsäure- und Methacrylsäurealkylester, Acrylnitril und Styrol bzw. α-Methylstyrol zu verstehen, während Chloropren, Vinylchlorid und Maleinsäureanhydrid weniger bevorzugt sind. Als Acryl- und Methacrylsäureester kommen dabei vor allem solche mit 4–10 C-Atomen, vorzugsweise 4–6 C-Atomen, in der Alkoholkomponente in Betracht. Als Komponente C nicht geeignet sind im wesentlichen unpolare Polymerisate wie z.B. natürlicher Kautschuk, EPM, EPDM und Butadienhomopolymerisate, da deren Verträglichkeit mit TPU vermutlich zu gering ist. Stoffe dieser Art können jedoch gegebenenfalls anteilsweise (vorzugsweise < 10 Gew.-%, besonders bevorzugt < 5 Gew.-%, bezogen auf Komponenten C) mitverwendet werden.

Erfindungsgemäss kommen als Komponente C sowohl Homo- als auch Copolymerisate als auch Pfropfpolymerisate bzw. Pfropfcopolymerisate in Betracht, die vernetzt oder unvernetzt sein können, sofern sie hinsichtlich ihrer Zusammensetzung die eben erwähnten Kriterien erfüllen. Diese Polymerisate können nach an sich bekannten Verfahren (z.B. Emulsions-, Suspension-, Masse und Lösungspolymerisation bzw. Kombinationen dieser Verfahren) durch Polymerisation eines oder mehrerer olefinisch ungesättigter Monomerer hergestellt werden, wobei mindestens 10 Gew.-% der Monomeren polar und gleichzeitig mindestens 30 Gew.-% der Monomeren aus der Gruppe Butadien, Isopren und/oder Acrylsäureester ausgewählt sein sollen (im Falle der Verwendung von Acrylsäureestern sind diese selbstverständlich den «polaren Monomeren» zuzurechnen). Erfindungsgemäss besonders bevorzugt sind als Komponente C Pfropfpolymerisate, während vernetzte Polymere am wenigsten bevorzugt sind.

Vernetzte Polymere werden z.B. erhalten, wenn unvernetzte Polymerisate in an sich bekannter Weise durch Vernetzung mit Peroxid und/oder Schwefel, gegebenenfalls in Gegenwart von Russ oder anderen Füllstoffen, zu Gummi vulkanisiert werden.

Erfindungsgemäss geeignete Pfropfprodukte werden in an sich bekannter Weise erhalten, indem man die zu pfropfenden Monomeren in Gegenwart einer in einem separaten Polymerisationsschritt hergestellten Elastomerkomponente polymerisiert. Die Herstellung der Pfropfprodukte kann nach den bekannten Polymerisationsverfahren des Standes der Technik erfolgen. Hierzu gehören die Emulsions-, die Suspensions- und die Masse-Polymerisation sowie Kombinationen aus diesen Verfahren. Bevorzugt werden die Pfropfprodukte durch Emulsionspolymerisation hergestellt.

Die als Pfropfgrundlage dienende Elastomerkomponente ist vorzugsweise ein kautschukartiges Polymerisat mit einer Einfriertemperatur $T_G$ von $< -30\,°C$ (DIN 53 445), insbesondere $< -50\,°C$. Bevorzugt sind 1,3-Dien- und Acrylatkautschuke; besonders bevorzugt sind Butadien- und/oder Isopren-Polymerisate mit bis zu 30 Gew.-% Styrol und/oder Acrylnitril sowie Homo- und Copolymerisate aus Butadien und den oben genannten Acrylsäurealkylestern. Der Dienanteil bei der Herstellung der Pfropfgrundlage beträgt vorzugsweise 50–100 Gew.-%, besonders bevorzugt 75–100 Gew.-%.

Werden die Pfropfprodukte durch Emulsionspolymerisation hergestellt, so sollte die Teilchengrösse der Pfropfgrundlage (gemeint ist der Teilchendurchmesser $d_{50}$, d.h. der mittlere Durchmesser, unterhalb und oberhalb dessen jeweils 50% der Teilchen liegen) bevorzugt im Bereich von 0,05 bis 0,8 µm liegen. Die Pfropfgrundlage kann vernetzt oder unvernetzt sein; bevorzugt sind Produkte mit einem Gelgehalt >30% (gemessen in Toluol).

Als zu pfropfende Monomere kommen insbesondere Styrol, $\alpha$-Methylstyrol und Acrylnitril in Betracht. Wenn besondere Effekte erzielt werden sollen, dann kann man jedoch auch Methacrylnitril, Alkylester der Acrylsäure, Alkylester der Methacrylsäure oder Halogenderivate des Styrols und des $\alpha$-Methylstyrols einsetzen. Bevorzugt werden Gemische von Styrol und Acrylnitril im Gewichtsverhältnis 9:1 bis 1:1 als Pfropfmonomere angewandt.

Das Gewichtsverhältnis von Pfropfgrundlage zu Pfropfmonomeren liegt in der Regel zwischen 50:50 und 95:5, bevorzugt sind Gewichtsverhältnisse zwischen 70:30 und 87,5:12,5. Es ist auch möglich, Mischungen mehrerer Pfropfprodukte einzusetzen, wobei jedes Pfropfprodukt für sich den genannten Bedingungen genügt.

Die erfindungsgemässen Chemiewerkstoffe können im Prinzip so hergestellt werden, dass man die fertigen Komponenten A bis C «trocken» vermischt («dry blending»), z.B. mit Hilfe von Innenmischern oder Extrudern. Vorzugsweise stellt man jedoch das Polyurethan bereits in Gegenwart der Komponenten B und C (zweckmässigerweise in einer Reaktionsschnecke) her.

Das erfindungsgemäss bevorzugte Verfahren besteht darin, den Kautschuk in Pulverform in den Trichter einer selbstreinigenden Mehrwellenschneckenmaschine einzuspeisen und das faserförmige Material sowie die polyurethanbildenden Komponenten über dieselbe oder auch eine oder mehrere andere Einspeisstellen, gegebenenfalls portionsweise, in den Extruder einzubringen. Nachdem die Umsetzung der polyurethanbildenden Komponenten im wesentlichen abgeschlossen ist, wird der fertige erfindungsgemässe Kombinationswerkstoff aus dem Extruder ausgetragen, gegebenenfalls granuliert und in an sich bekannter Weise formgebend weiterverarbeitet.

Geeignete Schneckenmaschinen sind an sich bekannt und werden z.B. in den DE-Patentschriften 813 154, 862 668 und 940 109, in US-PS 3 233 025, US-PS 3 642 964, DE-OS 24 47 368, DE-OS 26 10 980 sowie insbesondere DE-AS 2 302 564 und DE-OS 25 49 372 (US-PS 3 963 679) beschrieben.

Es ist dabei jedoch erfindungsgemäss nicht zwingend erforderlich, in den Extrudern die in den drei letztgenannten Publikationen erwähnten speziellen Knetelemente anzuordnen.

Im Falle der Herstellung von Polyesterurethanen (weniger vorteilhaft bei 1,2-Polypropylenglykolätherurethanen) können Peroxide wie z.B. Dicumylperoxid, Cumyl-tert.-butylperoxid und $\alpha$, $\alpha'$-Di(tert.-butylperoxy)-diisopropylbenzol in einer Menge bis zu 3 Gew.-%, bezogen auf eingesetzten Kautschuk, mit zugegeben werden.

Die erfindungsgemässen Polymere werden insbesondere dort eingesetzt, wo eine starke Schlagbeanspruchung bei tiefen und hohen Temperaturen auftritt, z.B. können sie in der Fahrzeugindustrie bei Karosserieinnen- und -aussenteilen verwendet werden. Auch für dynamisch beanspruchte Teile in Elektrogeräten sind sie geeignet. Infolge ihrer guten Kälteschlagzähigkeit eignen sie sich auch insbesondere für die Herstellung von Skischuhen.

In den Beispielen wurde die Polyurethanreaktion auf einer handelsüblichen Zweiwellenschnekkenknetpresse durchgeführt.

Die Verweilzeiten der Reaktionsschmelze in der Schneckenmaschine betragen in der Regel 0,3–30 Minuten, bevorzugt 0,5 bis 4 Minuten. Die Temperatur des Schneckengehäuses liegt zwischen etwa 60 und 300 °C (ca. 80 bis 280 °C in der Eingangszone; ca. 100 bis 300 °C in der Mitte des Extruders und ca. 60 bis 250 °C in der Austragszone). Die aus dem Extruder austretende Schmelze wird nach an sich bekannten Verfahren abgeschreckt und zerkleinert. Die Verfahrensprodukte können auf die übliche Weise thermoplastisch verarbeitet werden.

Wenn nicht anders vermerkt, sind in den Beispielen Mengenangaben als Gewichtsteile bzw. Gewichtsprozente zu verstehen. In Beispiel 1 wird eine Zweiwellenschneckenknetpresse des Typs ZSK 53 V der Firma Werner & Pfleiderer, Stuttgart, mit selbstreinigendem Wellenbesatz verwendet. Die Länge des Verfahrensanteils entspricht etwa dem 42-fachen Wellendurchmesser. Für alle Beispiele wird der gleiche Wellenbesatz mit einem Knetelementanteil von ca. 20% verwendet. Der Verfahrensteil besteht aus 12 Gehäusen, wobei das erste mit einem Einspeisetrichter für den Kautschuk und die Faser versehen ist. Funktion und Wirkungsweise der Schneckenmaschine, von Knet- und Förderelementen des Wellenbesatzes usw. sind in den Firmenschriften von Werner & Pfleiderer bzw. in der DE-OS 2 302 564 (US-PS 3 963 679) ausführlich beschrieben.

Die in den Beispielen verwendete Faser ist eine handelsübliche Glasfaser mit einem Durchmesser von 12 μm und 6 mm Länge, die gemäss Beispiel 1 von DE-AS 24 26 657 beschlichtet ist.

Herstellung von Pfropfkautschuk A:

a) Pfropfgrundlage:

In einem druckfesten Rührgefäss wird eine Mischung aus 68 Teilen entsalztem Wasser, 0,5 Teilen des Natriumsalzes der disproportionierten Abietinsäure, 100 Teilen Butadien, 0,4 Teilen n-Dodecylmercaptan und 0,5 Teilen Kaliumperoxidisulfat vorgelegt. Die Reaktion wird zwischen 55 und 75 °C geführt (Start – Endtemperatur). Im Laufe der Reaktion werden 1,5 Teile des Natriumsalzes der disproportionierten Abietinsäure nachdosiert. Die Polymerisation wird bis zu einem Umsatz von ca. 98% geführt.

Charakterisierung des entstandenen Polybutadienlatex:

| | |
|---|---|
| Konzentration: | 58,5% |
| Gelgehalt in Toluol: | >80% |
| Teilchengrösse: | $d_{50} = 0,4$ μm |
| Einfriertemperatur: | − 80 °C (DIN 53 445) |

b) Herstellung des Pfropfpolymerisates:

137 Teile des Pfropfgrundlagenlatex werden in einem Rührgefäss vorgelegt und mit 118 Teilen entsalztem Wasser verdünnt, in dem zuvor 0,5 Teile Kaliumperoxidisulfat gelöst wurden. Nach Verdrängung der Luft aus der Lösung durch Durchleiten von Stickstoff und Erwärmen auf 65 °C werden in 2 getrennten Zuläufen a) 2 Teile des Natriumsalzes der disproportionierten Abietinsäure (gelöst in 25 Teilen Wasser) und b) eine Mischung aus 5,6 Teilen Acrylnitril und 14,4 Teilen Styrol gleichmässig über einen Zeitraum von 4h zudosiert. Zur Vervollständigung der Reaktion wird nach beendetem Zulauf noch 2 h bei 65 °C weitergerührt.

Der so erhaltene Pfropfpolymerisatlatex wird mit 2%iger Magnesiumsulfatlösung koaguliert, das Koagulat abgetrennt, salzfrei gewaschen und bei 70 °C im Vakuum getrocknet.

Charakterisierung des Pfropfpolymerisates:

| | |
|---|---|
| Elastomergehalt: | 80% |
| Styrolgehalt: | 14,4% |
| Acrylnitrilgehalt: | 5,6% |

Beispiel 1

Über je eine zweiwellige Dosierschnecke werden 10 Teile Pfropfkautschuk A und 10 Teile Glasfaser in den Trichter der Schneckenmaschine eingespeist. In den folgenden Gehäusen werden die PUR-Rohstoffe zugegeben (insgesamt 90 Teile):

In Gehäuse 2 werden eine Mischung von

36,1 Teilen Butandiol-1,4/Adipinsäurepolyester (OH-Zahl: 56)

0,11 Teilen Stearylamid,

0,18 Teilen 2,6,2',6'-Tetraisopropyldiphenylcarbodiimid und

0,22 Teilen 2,6-Di-tert.-butyl-4-methylphenol sowie

40,8 Teile 4,4'-Diisocyanatodiphenylmethan (MDI) und in Gehäuse 3

12,63 Teile Butandiol-1,4 zudosiert.

(NCO/OH = 1,03)

Die Einlauftemperatur des Esters beträgt ca. 100 °C, die des MDI ca. 60 °C und die des Kettenverlängerers 20 °C. An der Schneckenmaschine wurden folgende Gehäusetemperaturen eingestellt:

| Gehäuse | 1 | 3 | 5 | 7 | 9 | 11 | 12 | Kopf |
|---|---|---|---|---|---|---|---|---|
| Temperatur | 100 | 180 | 200 | 220 | 220 | 180 | 140 | 190° C. |

Es wird ein Thermoplast erhalten, der nach zweitägiger Lagerung, Verspritzen und Temperierung von 24 Stunden bei 110 °C folgende Eigenschaften aufweist:

| | Norm | | Masseinheiten |
|---|---|---|---|
| Shore D-Härte | DIN 53505 | 72 | |
| Grenzbiegespannung | DIN 53452 | 47 | MPa |
| Bruchdehnung | DIN 53504 | 110 | % |
| Zugfestigkeit | DIN 53504 | 40 | MPa |

Tabelle Seite 5 (Fortsetzung)

| | Norm | | Masseinheiten |
|---|---|---|---|
| Kerbschlagzähigkeit bei − 30 °C | DIN 53453 | 21 | kJ/m² |
| Linearer Ausdehnungskoeff. | VDE 0304/I ca. | 50.10⁻⁶ | K⁻¹ |
| Wärmebiegeversuch | eigene Prüfnorm | 0,8 | mm |

Bei der eigenen Prüfnorm für den Wärmebiegeversuch wird ein 130×10×4 mm-Prüfkörper bei einer Stützweite von 100 mm in der Mitte (in Richtung der 4 mm) belastet, so dass sich eine konstante Spannung von 14,7 kPa einstellt. Bei isothermer Belastung von 105 °C wird über einen Zeitraum von 4 Stunden gemessen. Bei allen Prüfungen stellt sich nach 2 Stunden eine konstante Durchbiegung ein.

Man sieht, dass die erfindungsgemässen Werkstoffen sehr gute Kälteschlag- und Wärmestandswerte aufweisen. Der lineare Ausdehnungskoeffizient ist günstig, die mechanischen Festigkeiten einschliesslich Bruchdehnung sind hoch. Die Lackhaftung von Zweikomponentenlacken auf Polyurethanbasis ist sehr gut.

**Beispiel 2**

Es wird nach Beispiel 1 verfahren; anstatt des Pfropfkautschuks A wird jedoch ein Pfropfkautschuk B eingesetzt, der analog zu Pfropfkautschuk A hergestellt wurde: Bei der Herstellung des Pfropfpolymerisats werden jedoch anstelle von 137 Teilen des Pfropfgrundlagenlatex hier 85 Teile vorgelegt und anstatt mit 118 Teilen Wasser mit 140 Teilen verdünnt. Insgesamt werden im Laufe der Pfropfreaktion 15 Teile Acrylnitril und 35 Teile Styrol zudosiert, so dass das Pfropfpolymerisat einen Gehalt von 50% Butadien, 15% Acrylnitril und 35% Styrol hat.

An den getemperten Spritzkörpern werden folgende Prüfwerte gemessen (gleiche Prüfnormen wie in Beispiel 1):

| | | |
|---|---|---|
| Shore D-Härte | 73 | |
| Grenzbiegespannung | 50 | MPa |
| Bruchdehnung | 80 | % |
| Zugfestigkeit | 36 | MPa |
| Kerbschlagzähigkeit bei − 30 °C | 13 | kJ/m² |
| Linearer Ausdehnungskoeffizient | ca. 60.10⁻⁶ | K⁻¹ |
| Wärmebiegeversuch | 0,9 | mm |

Im Vergleich zu Beispiel 1 werden somit (mit Ausnahme der Kälteeigenschaften) ähnliche Werte erhalten. Die Kälteeigenschaften sind bei dem in dieser Hinsicht optimalen Pfropfkautschuk A besser.

**Beispiel 3**

Beispiel 1 wird wiederholt, jedoch wird anstatt des Pfropfkautschuks A ein in Emulsionspolymerisation gewonnener handelsüblicher Butadien-Acrylnitrilkautschuk eingesetzt. Der Nitrilgehalt des Kautschuks beträgt ca. 30%.

An den getemperten Spritzgiesskörpern werden folgende Prüfwerte gemessen:

| | | |
|---|---|---|
| Shore D-Härte | 69 | |
| Grenzbiegespannung | 43 | MPa |
| Bruchdehnung | 110 | % |
| Zugfestigkeit | 39 | MPa |
| Kerbschlagzähigkeit bei − 30 °C | 11 | kJ/m² |
| Linearer Ausdehnungskoeffizient | ca. 80.10⁻⁶ | K⁻¹ |
| Wärmebigeversuch | 1,0 | mm |

**Beispiel 4 (Vergleichsversuch)**

Beispiel 1 wird wiederholt, anstatt des Pfropfkautschuks A wird jedoch die reine Elastomerkomponente des Pfropfkautschuks A, d.h. ein in Emulsion polymerisiertes Polybutadien eingesetzt.

Nach dem Verspritzen und Tempern werden folgende Prüfwerte gemessen:

| Shore D-Härte | 62 | |
|---|---|---|
| Grenzbiegespannung | 40 | MPa |
| Bruchdehnung | 45 | % |
| Zugfestigkeit | 22 | MPa |
| Kerbschlagzähigkeit bei − 30 °C | 3 | kJ/m² |
| Linearer Ausdehnungskoeffizient | $90.10^{-6}$ | $K^{-1}$ |
| Wärmebiegeversuch | 1,3 | mm |

Die Kälteschlagfestigkeit ist bei Verwendung des nicht mit einer Pfropfhülle versehenen, unpolaren, vernetzten Polybutadiens schlecht. Die Festigkeitswerte sind mässig.

Beispiel 5 (Vergleichsversuch)
Es wird ein PUR-Thermoplast gleicher Rohstoffbasis wie in Beispiel 1 hergestellt, jedoch werden anstatt 12,63 Teilen Butandiol-1,4 18 Teile und entsprechend mehr MDI (NCO/OH=1,03) eingesetzt. Der Thermoplast enthält keine Glasfaser und a) 10 Teile Acrylnitrilkautschuk gemäss Beispiel 3 bzw. b) keine Kautschukkomponente.

| Prüfwerte: | a) | b) | |
|---|---|---|---|
| Shore D-Härte | 67 | 70 | |
| Bruchdehnung | 270 | 290 | % |
| Zugfestigkeit | 41 | 49 | MPa |
| Kerbschlagzähigkeit (–30 °C) | 8 | 3 | kJ/m² |
| Linearer Ausdehnungskoeffizient | 220 | $200.10^{-6}K^{-1}$ | |
| Wärmebiegeversuch | >2,5 | >2,5 | mm |
| Grenzbiegespannung | 24 | 27 | MPa |

Diese nicht erfindungsgemässen Produkte zeigen eine unzureichende Wärmestandfestigkeit und hohe (konstruktiv oft ungünstige) Wärmeausdehnungskoeffizienten. Das Kälteschlagverhalten des reinen TPU ist schlecht.

Beispiel 6
Ein PUR-Elastomer wird durch Umsetzung von 41,67 Teilen Polycaprolacton (OHZ 56; Säurezahl: 0,2),
0,29 Teilen 2,6-Di-tert.-butyl-4-methylphenol,
0,17 Teilen Stearylamid,
35,37 Teilen Hexamethylendiisocyanat («HDI»),
16,66 Teilen Butandiol-1,4 und
0,83 Teilen Hexandiol-1,6
in der Zweiwellenschneckenmaschine von Beispiel 1 ohne Faser- und Kautschukkomponente hergestellt, wobei nach folgender Verfahrensvariante gearbeitet wird: Zunächst wird separat ein NCO-Präpolymer aus dem Polycaprolacton + Zusatzmitteln und 15,16 Teilen Hexamethylendiisocyanat im Laufe von 2 Stunden bei 115 °C hergestellt. 57,29 Teile dieses Präpolymers werden bei 120 °C zusammen mit 6,25 Teilen Butandiol-1,4 in den Trichter der Schneckenmaschine eingespeist. In Gehäuse 6 werden 20,21 Teile HDI, 10,41 Teile Butandiol-1,4 und 0,83 Teile Hexandiol-1,6 zugeführt. In einem Zweiwellenextruder wird dann der fertige PUR-Thermoplast mit Pfropfkautschuk A und Glasfaser coextrudiert. Es werden 5 Gew.-% Pfropfkautschuk und wechselnde Mengen Glasfaser (gemäss Beispiel 1) eingesetzt:
a) ohne Glasfaser
b)   5 Gew.-% Glasfaser
c) 10 Gew.-% Glasfaser
d) 20 Gew.-% Glasfaser
Nach dem Verspritzen und Tempern des Granulats werden folgende Prüfwerte ermittelt:

| | a | b | c | d | |
|---|---|---|---|---|---|
| Shore D-Härte | 60 | 62 | 64 | 67 | |
| Bruchdehnung | 300 | 180 | 90 | 40 | % |
| Zugfestigkeit | 32 | 27 | 30 | 35 | MPa |
| Kerbschlagzähigkeit (− 30 °C) | 8 | 11 | 13 | 15 | kJ/m² |
| Linearer Ausdehnungskoeff. | 190 | 180 | 50 | 30 | $.10^{-5}K^{-1}$ |
| Grenzbiegespanngung | 13 | 21 | 38 | 70 | MPa |
| Wärmebiegeversuch | >2,5 | 1,0 | 0,9 | 0,8 | mm |

Der grösste Versteifungsfaktor wird bei hohen Glasfasergehalten erzielt, wobei – je nach Anwendungszweck – ein Kompromiss zwischen Versteifungseffekt und Bruchdehnungswerten gefunden werden muss.

**Patentansprüche**

1. Thermoplastischer Chemiewerkstoff, bestehend aus

A) 60–97 Gew.-% (bezogen auf A+B) eines thermoplastischen Polyurethans und

B) 40–3 Gew.-% (bezogen auf A+B) eines faserartigen Verstärkungsmaterials, dadurch gekennzeichnet, dass er (bezogen auf 100 Teile A+B)

C) 36–3 Gew.-Teile eines polaren Polymerisats enthält, wobei das polare Polymerisat mindestens 10 Gew.-% an polaren Monomereinheiten und mindestens 30 Gew.-% an Butadien-, Isopren- und/oder Acrylsäureestereinheiten enthält.

2. Chemiewerkstoff nach Anspruch 1, dadurch gekennzeichnet, dass er 15–4 Gew.-Teile des polaren Polymerisats enthält.

3. Chemiewerkstoff nach Anspruch 1 und 2, dadurch gekennzeichnet, dass das Polymerisat mehr als 20 Gew.-% eines oder mehrerer der polaren Monomereinheiten Acrylsäurealkylester, Methacrylsäurealkylester, Acrylnitril, Styrol und α-Methylstyrol enthält.

4. Chemiewerkstoff nach Anspruch 1 bis 3, dadurch gekennzeichnet, dass Komponente C ein Pfropfpolymerisat ist, wobei das Gewichtsverhältnis von Pfropfgrundlage zu Pfropfmonomeren zwischen 50:50 und 95:5 liegt.

5. Chemiewerkstoff nach Anspruch 4, dadurch gekennzeichnet, dass die Pfropfgrundlage ein Elastomer mit einem 1,3-Diengehalt von 50–100 Gew.-% und einer Einfriertemperatur unterhalb von − 30 °C ist.

6. Chemiewerkstoff nach Anspruch 4 und 5, dadurch gekennzeichnet, dass die Pfropfgrundlage ein Homo- oder Copolymerisat aus Butadien und/oder Acrylsäurealkylestern ist.

7. Chemiewerkstoff nach Anspruch 4 bis 6, dadurch gekennzeichnet, dass die Pfropfmonomeren Styrol und Acrylnitril im Gewichtsverhältnis zwischen 9:1 und 1:1 sind.

8. Chemiewerkstoff nach Anspruch 1 bis 7, dadurch gekennzeichnet, dass Komponente B beschlichtete Glasfasern mit einem Durchmesser von 8–30 μm und einer Länge von 0,3–100 mm sind.

9. Verfahren zur Herstellung von thermoplastischen Chemiewerkstoffen nach Anspruch 1–8, dadurch gekennzeichnet, dass die Komponenten A–C trocken vermischt und coextrudiert werden.

10. Verfahren zur Herstellung von thermoplastischen Chemiewerkstoffen nach Anspruch 1–8, dadurch gekennzeichnet, dass die Komponenten B und C vor oder während der Herstellung von Komponente A in einer Zweiwellenschneckenmaschine den polyurethanbildenden Komponenten zugesetzt werden.

**Claims**

1. Thermoplastic chemical material comprising

(A) from 60 to 97%, by weight, (based on (A) + (B)) of a thermoplastic polyurethane; and

(B) from 40 to 3%, by weight, (based on (A)+(B)) of a fibrous reinforcing material; characterised in that, based on 100 parts of (A)+(B), it contains:

(C) from 36 to 3 parts, by weight, of a polar polymer, the polar polymer containing at least 10% by weight of polar monomer units and at least 30% by weight, of butadiene, isoprene and/or acrylic acid ester units.

2. Chemical material according to claim 1, characterised in that it contains from 15 to 4 parts, by weight, of the polar polymer.

3. Chemical material according to claims 1 and 2, characterised in that the polymer contains more than 20%, by weight of one or more of the polar monomer units acrylic acid alkyl ester, methacrylic acid alkyl esters, acrylonitrile, styrene and α-methylstyrene.

4. Chemical material according to claims 1 to 3, characterised in that component (C) is a graft polymer and the proportion, by weight, of graft basis to graft monomers is in the range of from 50:50 to 95:5.

5. Chemical material according to claim 4, characterised in that the graft basis is an elastomer having a 1,3-diene content of from 50 to 100%, by weight, and a freezing temperature below − 30 °C.

6. Chemical material according to claims 4 and 5, characterised in that the graft basis is a homo- or co-polymer of butadiene and/or acrylic acid-alkyl esters.

7. Chemical material according to claims 4 to 6, characterised in that the graft monomers are styrene and acrylonitrile in proportions, by weight, in the range of from 9:1 to 1:1.

8. Chemical material according to claims 1 to 7, characterised in that component (B) is sized glass fibres having a diameter of from 8 to 30 μm and a lenght of from 0.3 to 100 mm.

9. Process for the production of thermoplastic chemical materials according to claims 1 to 8, characterised in that components (A) to (C) are mixed dry and co-extruded.

10. Process for the production of thermoplastic chemical materials according to claims 1 to 8, characterised in that components (B) and (C) are added to the polyurethane-forming components before of during the preparation of component (A) in a double shaft screw extruder.

**Revendications**

1. Une matière thermoplastique synthétique composée de:

A) 60–97% en poids (par rapport à A+B) d'un polyuréthanne thermoplastique et

B) 40–3% en poids (par rapport à A+B) d'une matière de renforcement de nature fibreuse, caractérisée en ce qu'elle contient (par rapport à 100 parties de A+B)

C) 36–3 parties en poids d'un polymérisat polaire, qui renferme au moins 10% en poids de motifs monomériques polaires et au moins 30% en poids de motifs de butadiène, d'isoprène et/ou d'acide acrylique.

2. Matière synthétique suivant la revendication 1, caractérisée en ce qu'elle contient 15–4 parties en poids de polymérisat polaire.

3. Matière synthétique suivant les revendications 1 et 2, caractérisée en ce que le polymérisat contient plus de 20% en poids d'un ou plusieurs des motifs monomériques ester alkylique d'acide acrylique, ester alkylique d'acide méthacrylique, acrylonitrile, styrène et α-méthylstyrène.

4. Matière synthétique suivant les revendications 1 à 3, caractérisée en ce que le composant C est un polymérisat greffé, le rapport en poids du substrat de greffage aux monomères greffés étant compris entre 50:50 et 95:5.

5. Matière synthétique suivant la revendication 4, caractérisée en ce que le substrat de greffage est un élastomère ayant une teneur en 1,3-diène de 50 à 100% en poids et une température de durcissement inférieure à −30 °C.

6. Matière synthétique suivant les revendications 4 et 5, caractérisée en ce que le substrat de greffage est un homopolymérisat ou un copolymérisat de butadiène et/ou d'esters alkyliques d'acide acrylique.

7. Matière synthétique suivant les revendications 4 à 6, caractérisée en ce que les monomères greffés sont le styrène et l'acrylonitrile dans un rapport en poids de 9:1 à 1:1.

8. Matière synthétique suivant les revendications 1 à 7, caractérisée en ce que le composant B consiste en fibres ensimées de verre ayant un diamètre de 8–30 μm et une longueur de 0,3–100 mm.

9. Procédé de production de matières thermoplastiques synthétiques suivant les revendications 1 à 8, caractérisé en ce que les composants A–C sont mélangés à sec et co-extrudés.

10. Procédé de production de matières thermoplastiques synthétiques suivant les revendications 1 à 8, caractérisé en ce que les composants B et C sont ajoutés aux composants formant le polyuréthanne avant ou pendant la production du composant A dans une machine à deux vis sans fin.